# EUROPÄISCHE PATENTSCHRIFT

(11) **EP 2 741 056 B1**
(45) Veröffentlichungstag und Bekanntmachung des Hinweises auf die Patenterteilung: **20.04.2016**
(21) Anmeldenummer: 12196301.1
(22) Anmeldetag: 10.12.2012
(51) Int. Cl.: G01D 5/26, G01D 5/34, G01D 5/347

(54) **Sende- und Empfangseinheit und Drehgeber mit einer solchen**
Transmission and receiver unit and rotary encoder with such
Unité d'émission et réception et encodeur en étant équipé

(43) Veröffentlichungstag der Anmeldung: 11.06.2014
(73) Patentinhaber: SICK STEGMANN GmbH, 78166 Donaueschingen (DE)
(72) Erfinder: Basler, Stefan, 78086 Brigachtal (DE); Mutschler, Reinhold, 78056 Villingen-Schwenningen (DE); Hopp, David, 78166 Donaueschingen (DE)
(74) Vertreter: Ludewigt, Christoph

(56) Entgegenhaltungen:
- EP-A1- 2 187 178
- EP-A2- 2 372 314
- DE-A1- 10 307 258
- DE-A1-102004 010 206
- GB-A- 1 045 994
- US-A1- 2002 039 463
- US-A1- 2005 023 450
- US-A1- 2006 227 845

## Beschreibung

Die Erfindung betrifft eine Sende- und Empfangseinheit, insbesondere für die Erfassung eines Drehwinkels sowie einen damit arbeitenden Drehgeber.

Zur Erfassung eines Drehwinkels z. B. einer Welle werden u. a. optische Wirkprinzipien eingesetzt. Unabhängig vom jeweiligen optischen Prinzip bestehen entsprechende Sensoren aus mindestens einer Lichtquelle, einer Maßverkörperung und einem Empfänger. Die Maßverkörperung ist verdrehsteif mit einer Welle verbunden, deren Bewegung zu detektieren ist und erzeugt über eine Relativbewegung zum Empfänger eine Intensitätsmodulation des Signals auf dem Empfänger, welche als Winkelsignal dient. Zwei grundlegende Aufbauvarianten finden Verwendung: Transmittiv und Reflexiv. Insbesondere die reflexive Auslegung, bei der der Strahlengang an der Maßverkörperung reflektiert wird, hat besondere Vorteile, da nämlich dann Sender und Empfänger auf der gleichen Seite angeordnet werden können, beispielsweise auf der gleichen Elektronikkarte. Damit ist eine echte Entkopplung von Drehgeber und drehender Maßverkörperung möglich. Der Drehgeber muss die Maßverkörperung lediglich nur noch "sehen".

Die Auslegung eines reflexiven Strahlengangs stellt je nach optischem Funktionsprinzip eine Herausforderung dar, da die einzelnen Komponenten, vor allem Sender und Empfänger, nicht entlang einer einzigen optischen Achse und orthogonal zu dieser ausgerichtet werden können. Für die meisten optischen Funktionsprinzipien bietet sich jedoch eine mittige Ausrichtung aller Komponenten vor allem aus Symmetriegründen an.

Das Bestreben beim Aufbau reflexiver optischer Funktionsprinzipien für Drehwinkelsensoren ist es, die Beleuchtung, die Maßverkörperung sowie den Empfänger zentrisch auf eine optische Achse zu bringen. Dies erfordert die zentrale Platzierung der Lichtquelle. Eine zentrale Platzierung der Lichtquelle wiederum erfordert eine Platzierung des Empfängers außerhalb der optischen Achse. Eine Symmetrie ergibt sich nur dann, wenn mehrere Empfänger um die Lichtquelle herum positioniert werden oder wenn das Licht umgelenkt wird. Dafür werden jedoch Strahlteiler, Spiegelsysteme o. Ä. benötigt, welche justiert werden müssen. In solchen Systemen sind die einzelnen Komponenten in verschiedenen nicht zueinander parallelen Aufbauebenen angeordnet. Die Positionierung bzw. die Justage der optischen Komponenten in einem System mit mehreren Aufbauebenen ist aufwändig und kostenintensiv. Ebenso ist eine Umlenkung des Beleuchtungsstrahlengangs kompliziert und meist mit erheblichem Intensitätsverlust behaftet. Darüber hinaus benötigt ein solcher Aufbau erheblichen Bauraum.

Aus der GB 1 045 994 A ist eine Vorrichtung bekannt, mit dem die Stellung eines Kopfs eines Piloten detektiert werden kann. In einer Ausführung weist diese Vorrichtung eine Lichtquelle auf, deren Licht auf einen mit einem Pilotenhelm verbundenen Polarisator trifft und polarisiert reflektiert wird. Das reflektierte Licht wird von zwei Lichtempfängern empfangen, nachdem es einen als Analysator dienendes Polarisationsfilter durchlaufen hat. Der Analysator weist mittig ein Loch auf, durch den das Sendelicht verläuft, damit Sender und Empfänger auf einer Höhe angeordnet und einfach verdrahtet werden können.

Aus der US 2006/0227845 A1 und der US 2002/0039463 A1 ist ein sogenannter Displacement Sensor bekannt. Mit diesem Sensor kann z.B. die Auslenkung einer Membran mittels optischer Interferenz detektiert werden. Dazu ist ein Lichtsender und ein Lichtempfänger vorgesehen, die im Wesentlichen koaxial angeordnet sind. Der Lichtsender strahlt durch ein Loch in dem Silizium-Wafer des Lichtempfängers. Zwischen dem Lichtsender und Lichtempfänger und der Membran ist ein Gitter angeordnet, an dem ein Teil des Sendelichts reflektiert wird. Der restliche Teil wird an der Membran reflektiert und durchläuft nach Reflektion das Gitter noch einmal, so dass beide reflektierten Komponenten interferieren können. Über die Interferenz kann eine Änderung des Abstands zwischen Membran und Gitter bestimmt werden.

Aus den Veröffentlichungen DE 10307258 A1, DE 102004010206 A1, US 2005/0023450 A1 sind Vorrichtungen nach dem Oberbegriff des Anspruchs 1 bekannt.

Davon ausgehend ist es Aufgabe der Erfindung, einen Drehgeber mit einem neuen Aufbaukonzept zur Positionierung der Lichtquelle und des Empfängers vorzustellen, mit dem die vorgenannten Nachteile vermieden werden können.

Diese Aufgabe wird gelöst durch einen Drehgeber mit den Merkmalen des Anspruchs 1.

Der erfindungsgemäße Drehgeber zur Messung des Drehwinkels zweier relativ zueinander rotierender Objekte weist eine Sende- und Empfangseinheit mit einem Lichtsender, der Sendelicht in eine Sendelichtrichtung abstrahlt und einen Lichtempfänger mit einer Lichtempfangsfläche auf, wobei die Lichtempfangsfläche derart angeordnet ist, dass die Sendelichtrichtung der Flächennormalen der Lichtempfangsfläche entspricht und der Lichtempfänger zurückreflektiertes Sendelicht als Empfangslicht empfängt. Der Lichtsender ist auf der der Lichtempfangsfläche abgewandten Seite des Lichtempfängers angeordnet, und das Sendelicht tritt durch ein Loch in der Lichtempfangsfläche. Zwischen Lichtsender und Lichtempfänger ist eine Elektronikkarte angeordnet, auf der die beiden Elemente montiert sind und wobei der Lichtsender durch ein Loch in der Elektronikkarte das Sendelicht abstrahlt, das dann auch durch das Loch in der Empfangsfläche tritt. Weiter ist der Drehgeber als Polarisationsencoder ausgebildet, und weist einen Polarisator auf, der sich relativ zur Lichtquelle dreht und eine Maßverkörperung bildet. An dem Polarisator wird das Sendelicht reflektiert und tritt durch einen oder mehrere polarisierende Analysatoren, die jeweils vor Empfangselementen angeordnet sind. Der Empfänger weist wenigstens zwei getrennt auswertbare Empfangsbereiche auf, die den Analysatoren zugeordnet sind, wobei die Polarisationswinkel der Analysatoren einen Drehwinkelabstand zueinander haben

Ein wesentlicher Vorteil der Erfindung ist der so mögliche symmetrische Aufbau, so dass Lichtsender und Lichtempfänger im Wesentlichen kollinear angeordnet sind, so dass ein kompakter Aufbau gewährleistet ist, ohne dass mehrere Aufbauebenen notwendig sind. Es werden dafür nur wenige Komponenten benötigt. Lichtsender und Lichtempfänger sind zu einer einfach zu handhabenden Einheit integriert. Dabei kann das Licht absolut rotationssymmetrisch auf die Empfangsfläche fallen, da diese sich um das Loch herum erstreckt. Durch die Symmetrie können somit die eingangs genannten Nachteile vermieden werden. Mögliche, durch eine Asymmetrie bedingte, systematische Fehler lassen sich vermeiden.

Die erfindungsgemäße Sende- und Empfangseinheit mit dem Lichtempfänger bzw. Empfängerchip und dem Lichtsender ist als Optikmodul flexibel einsetzbar und für unterschiedlichste optische Funktionsprinzipien geeignet. Eine störende direkte Beleuchtung des Empfängers durch den Lichtsender ist praktisch ausgeschlossen, da die Sendelichtabstrahlrichtung mit der Flächennormalen der Lichtempfangsfläche zusammenfällt.

Das in der Lichtempfangsfläche vorgesehene Loch kann gleichzeitig als Blende für das Sendelicht dienen, so dass extra Blenden entfallen können.

Zur Bildung einer kompakten Sende- und Empfangseinheit, in der Lichtsender und Lichtempfänger bereits justiert zueinander vormontiert sind, ist vorgesehen, dass zwischen Lichtsender und Lichtempfänger eine Elektronikkarte angeordnet ist, auf der die beiden Elemente montiert sind und wobei der Lichtsender durch ein Loch in der Elektronikkarte das Sendelicht abstrahlt, das dann auch durch das Loch in der Empfangsfläche tritt.

In Weiterbildung der Erfindung kann in dem Loch in der Elektronikkarte und/oder in dem Loch in der Lichtempfangsfläche ein optisches Element mit lichtbrechender, lichtbeugender und/oder lichtpolarisierender Funktion und/oder mit diffraktiven Strukturen zur Beugung, Umlenkung oder Dispersion des Sendelichts vorgesehen sein. Das optische Element kann auch als optisches Filter mit Wellenlängenselektion für das Sendelicht ausgebildet sein. Diese Ausführungsformen haben den Vorteil, dass optische Linsen- und/oder Filterfunktionen in der Sende- und Empfangseinheit integriert sein können und damit weitere separate optische Komponenten eingespart werden können.

Mit Vorteil ist der Lichtsender als eine LED, ein LED-Chip, eine Laserdiode oder ein Laserchip ausgebildet. Der Lichtempfänger kann als Empfängerarray in CCD oder in CMOS Bauweise ausgebildet sein.

Besonders vorteilhaft ist die Erfindung einsetzbar in Drehwinkelsensoren, die nach dem polarisationsoptischen Prinzip den Drehwinkel bestimmen und bei denen der Strahlengang reflexiv ausgelegt ist. Der Empfänger ist vorzugsweise als Lichtempfängerarray ausgebildet. Durch Auswertung der von den beiden Empfangsbereichen erhaltenen Signale können inkremental ein Drehwinkel und eine Drehrichtung bestimmt werden.

Um eine Eindeutigkeit über 360° zu erzielen, kann der Polarisator als Scheibe mit einer Normalen ausgebildet sein, wobei die Normale mit der Drehachse einen von Null verschiedenen Winkel bildet.

Im Folgenden wird die Erfindung anhand eines Ausführungsbeispiels unter Bezugnahme auf die Zeichnung im Einzelnen erläutert. In der Zeichnung zeigen:

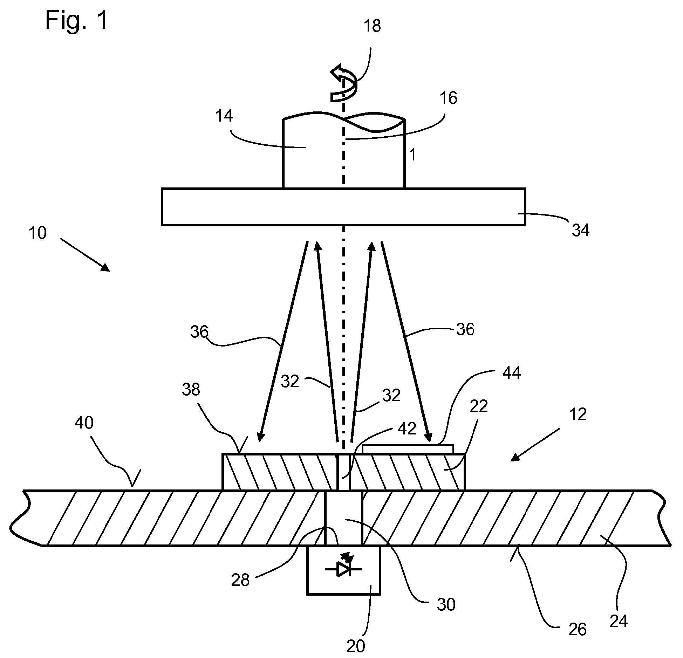

- Fig. 1: eine schematische Darstellung eines erfindungsgemäßen Drehgebers mit einer erfindungsgemäßen Sende- und Empfangseinheit;
- Fig. 2: eine Darstellung wie Fig. 1 einer anderen Ausführungsform.

Ein erfindungsgemäßer Drehgeber 10 umfasst eine erfindungsgemäße Sende- und Empfangseinheit 12 für die Erfassung eines Drehwinkels einer Welle 14, die sich um eine Drehachse 16 in Pfeilrichtung 18 dreht. Der Drehgeber 10 ist drehfest angeordnet und kann die Drehung der Welle 14 in diesem Ausführungsbeispiel nach dem polarisationsoptischen Prinzip bestimmen.

Die Sende- und Empfangseinheit 12 weist einen Lichtsender 20 und einen Lichtempfänger 22 auf. Lichtsender 20 und Lichtempfänger 22 sind symmetrisch angeordnet, was in diesem Ausführungsbeispiel bedeutet, dass sie symmetrisch zur Drehachse 16 liegen und ihre jeweiligen optischen Achsen mit der Drehachse 16 zusammenfallen.

Der Lichtsender 20 ist auf einer Rückseite 26 einer Elektronikkarte 24 befestigt und zwar in der Weise, dass die Licht abstrahlende Fläche 28 des Lichtsenders 20 zur Rückseite 26 hin gerichtet ist. Damit das Licht aus dem Lichtsender 20 dann auch austreten kann, weist die Elektronikkarte 24 ein Loch 30 auf, das mit der Licht abstrahlenden Fläche 28 fluchtet und so Sendelicht 32 entlang der optischen Achse 16 in Richtung auf eine Maßverkörperung 34 strahlen kann.

Von der Maßverkörperung 34 wird das Sendelicht 32 reflektiert und fällt als Empfangslicht 36 auf eine Lichtempfangsfläche 38 des Lichtempfängers 22. Der Lichtempfänger 22 ist auf der Oberseite 40 der Elektronikkarte 24 angeordnet und die Lichtempfangsfläche 38 ist von der Elektronikkarte 24 abgewandt und der Maßverkörperung 34 zugewandt, wobei die optische Achse des Lichtempfängers 22 koaxial zur optischen Achse des Lichtsenders 20 liegt. Der Lichtempfänger 22 ist vorzugsweise als eine Anordnung mehrerer Photodioden ausgebildet und besonders bevorzugt als Lichtempfängerarray mit mehreren Empfangselementen in CCD- oder CMOS-Bauweise.

Damit das Sendelicht 32 bei dieser Anordnung überhaupt die Maßverkörperung erreicht, weist die Lichtempfangsfläche 38 und damit auch der Lichtempfänger 22 bevorzugt mittig ein Loch 42 auf, das mit der optischen Achse 16 und dem Loch 30 in der Elektronikkarte 24 fluchtet und durch das das Sendelicht 32 treten kann.

Somit ist eine Anordnung geschaffen, bei der das Sendelicht 32 in eine Sendelichtrichtung abstrahlt, die einer Flächennormalen N der Lichtempfangsfläche entspricht und somit der Lichtsender 20 und der Lichtempfänger 22 gewissermaßen "in die gleiche Richtung" schauen. Das Sendelicht 32 des auf der der Lichtempfangsfläche 38 abgewandten Seite des Lichtempfängers 22 angeordneten Lichtsenders 20 tritt dabei mittig durch den Lichtempfänger 22 hindurch, so dass das Empfangslicht 36, das durch Reflexion an der Maßverkörperung 34 entstanden ist, rund um das Loch 42 auf die Lichtempfangsfläche 38 fallen kann und somit vom Lichtempfänger 22 nachgewiesen wird.

Die Elektronikkarte 36 kann weitere nicht dargestellte elektronische Komponenten, z. B. zur Ansteuerung des Lichtsenders 20 und/oder Auswertung der Signale des Lichtempfängers 22 und/oder Verarbeitung der Signale und Ausgabe von Ausgangssignalen, z. B. in Form von Winkelwerten, aufweisen.

Der Lichtsender 20 kann eine LED, ein LED-Chip, eine Laserdiode oder ein Laserchip sein.

Der wesentliche Vorteil und besondere Sinn und Zweck der erfindungsgemäßen Sende- und Empfangseinheit 12 wird deutlich bei Betrachtung des damit ausgerüsteten, erfindungsgemäßen Drehgebers 10. Als Beispiel wird die Funktionsweise eines Drehgebers beschrieben, der nach dem Prinzip der Polarisation, also durch Detektion einer Polarisationsrichtung, den Drehwinkel bestimmt.

Das Licht 32 des Lichtsenders, das im Falle einer LED unpolarisiert ist, wird leicht divergent kegelförmig abgestrahlt und trifft auf die sich mit der Welle 14 drehende Maßverkörperung, die hier als Linearpolarisator 34 ausgebildet ist. Das von dem Polarisator 34 reflektierte Licht (Empfangslicht 36) weist dann eine lineare Polarisation auf, deren Richtung dem aktuellen Drehwinkel der Welle 14 entspricht. Das Empfangslicht 36 durchtritt einen Analysator 44, der nichts anderes ist als ein Linearpolarisator und wird von dem unterhalb des Analysators 44 gelegenen Empfangsbereich des Lichtempfängers 22 detektiert. Vorteilhafterweise ist der Lichtempfänger als Empfängerarray ausgebildet, wobei vor jedem Empfangselement ein Analysator angeordnet ist und die Analysatoren unterschiedliche Polarisationsrichtungen aufweisen. Die Intensität des dort gemessenen Lichts hat dann eine cos²-Abhängigkeit vom Drehwinkel. Eine analoge Messung wird in einem anderen Bereich des Lichtempfängers 22, wobei der Bereich aber einen Drehwinkelabstand zum ersten Bereich aufweist, mit gleichem oder einem anderen Analysator gemacht. Diese Messung an dem zweiten Ort liefert ein zweites cos²-Signal, das gegenüber dem ersten entsprechend der Ausrichtung des Analysators um einen entsprechenden Winkel verschoben ist. Beide cos²-Signale zusammen liefern in bekannter Weise einerseits einen Drehwinkel und andererseits eine Drehrichtung.

Prinzipiell ist eine solche Erfassung des Drehwinkels zweier relativ zueinander und um eine Drehachse rotierender Objekte mit Hilfe der Polarisationseigenschaften des Lichts bekannt. Beispiele für derartige Vorrichtungen zeigen die DE 201 02 192 U1, EP 2 187 78 A1, EP 1 507 137 A1 oder US 7,777,879. Aufgrund der physikalischen Eigenschaften der Polarisation weisen die drehwinkelabhängigen Signale wenigstens zwei Perioden pro Umdrehung um 360° auf. Es fehlt eine Information, die eine Eindeutigkeit über 360° liefern würde, so dass der Drehwinkel über 360° nicht absolut bestimmt werden kann.

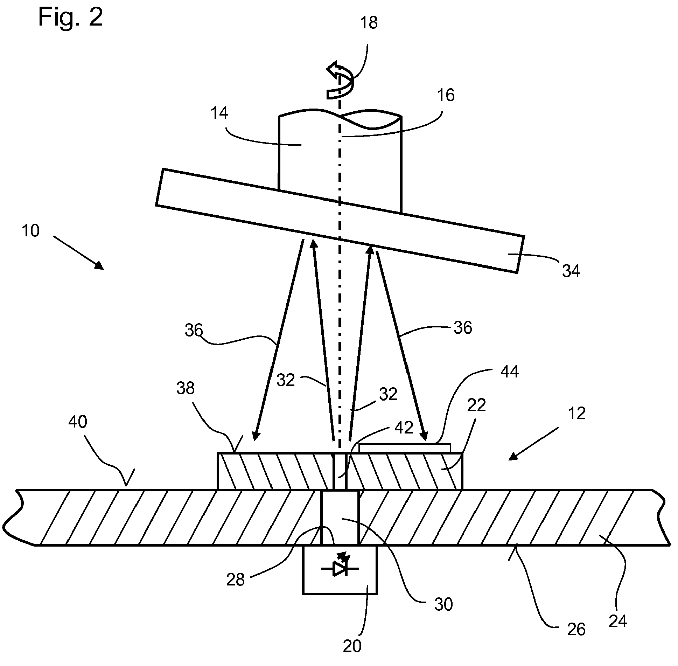

Um eine solche Information bereitzustellen, ist der Polarisator 34 leicht schräg zur optischen Achse 16 geneigt, also entsprechend "schief' auf der Welle 14 montiert, wie dies in Fig. 2 dargestellt ist. Dadurch wird den gemessenen Signalen eine weitere Intensitätsmodulation, die über 360° periodisch ist, aufgeprägt, wodurch die fehlende Information zur Erlangung der Eindeutigkeit bereitgestellt ist.

In weiteren nicht dargestellten Ausführungsformen können in dem Loch 30 der Elektronikkarte und/oder in dem Loch 42 in der Lichtempfangsfläche 38 ein oder mehrere optische Elemente angeordnet sein. Diese optischen Elemente können ausgebildet sein, um das Sendelicht 32 zu beeinflussen. So kann das optische Element eine lichtbrechende, lichtbeugende und/oder lichtpolarisierende Funktion aufweisen und/oder mit diffraktiven Strukturen zur Beugung, Umlenkung oder Dispersion des Sendelichts vorsehen sein. Das optische Element kann auch als optisches Filter mit Wellenlängenselektion für das Sendelicht 32 ausgebildet sein.

## Patentansprüche

1. Drehgeber zur Messung des Drehwinkels zweier relativ zueinander rotierender Objekte mit einer Sende- und Empfangseinheit (12) mit einem Lichtsender (20), der Sendelicht (32) in eine Sendelichtrichtung abstrahlt und einem Lichtempfänger (22) mit einer Lichtempfangsfläche (38), die derart angeordnet ist, dass die Sendelichtrichtung der Flächennormalen der Lichtempfangsfläche entspricht und der Lichtempfänger (22) zurückreflektiertes Sendelicht (32) als Empfangslicht (26) empfängt, wobei der Lichtsender (20) auf der der Lichtempfangsfläche (38) abgewandten Seite des Lichtempfängers (22) angeordnet ist und das Sendelicht (32) durch ein Loch (42) in der Lichtempfangsfläche (38) tritt, **dadurch gekennzeichnet, dass** zwischen Lichtsender und Lichtempfänger eine Elektronikkarte angeordnet ist und der Lichtsender durch ein Loch in der Elektronikkarte das Sendelicht abstrahlt und dass der Drehgeber als Polarisationsencoder (10) ausgebildet ist mit einem Polarisator (42), der sich relativ zur Lichtquelle (20) dreht und an dem das Sendelicht (28) reflektiert wird, und dass der Empfänger (22) wenigstens zwei getrennt auswertbare Empfangsbereiche aufweist, denen wenigstens ein polarisierender Analysator (44) vorgeordnet ist, wobei die Polarisationsrichtungen der Analysatoren einen Drehwinkelabstand zueinander haben.

2. Drehgeber nach einem der vorhergehenden Ansprüche, **dadurch gekennzeichnet, dass** in dem Loch der Elektronikkarte und/oder in dem Loch der Lichtempfangsfläche ein optisches Element mit lichtbrechender, lichtbeugender und/oder lichtpolarisierender Funktion für das Sendelicht vorgesehen ist.

3. Drehgeber nach einem der vorhergehenden Ansprüche, **dadurch gekennzeichnet, dass** in dem Loch der Elektronikkarte und/oder in dem Loch der Lichtempfangsfläche ein optisches Filter mit Wellenlängen-selektion vorgesehen ist.

4. Drehgeber nach einem der vorhergehenden Ansprüche, **dadurch gekennzeichnet, dass** in dem Loch der Elektronikkarte und/oder in dem Loch der Lichtempfangsfläche ein optisches Element mit diffraktiven Strukturen vorgesehen ist zur Beugung, Umlenkung oder Dispersion des Sendelichts.

5. Drehgeber nach einem der vorhergehenden Ansprüche, **dadurch gekennzeichnet, dass** der Lichtsender eine LED, ein LED-Chip, eine Laserdiode oder ein Laserchip ist.

6. Drehgeber nach einem der vorhergehenden Ansprüche, **dadurch gekennzeichnet, dass** der Lichtempfänger als eine Anordnung mit mehreren Photodioden, insbesondere als Empfängerarray in CCD oder in CMOS Bauweise, ausgebildet ist.

7. Drehgeber nach einem der vorhergehenden Ansprüche, **dadurch gekennzeichnet, dass** der Polarisator als Scheibe mit einer Normalen ausgebildet ist und die Normale mit der Drehachse einen von Null verschiedenen Winkel bildet.

## Claims

1. Encoder for measuring the angle of rotation of two relatively rotating objects with a transmitting and receiving unit (12), with a light transmitter (20), which radiates the transmitted light (32) in a transmitting direction of light and with a light receiver (22) having a light receiving surface (38), which is arranged such that the transmitted light direction corresponds to the surface normal of the light-receiving surface and the light receiver (22) receives back reflected transmission light (32) as receiving light (26), wherein the light transmitter (20) is arranged on that side of the light receiver which faces away from the light receiver (22) and the transmitted light (32) passes through a hole (42) in the light receiving surface (38),
**characterized in that** a circuit board is arranged between the light transmitter and light receiver and the light transmitter radiates through a hole in the circuit board and **in that** the rotary encoder is constructed as a polarization encoder (10) having a polarizer (42) rotating relatively to the light source (20) and at which the transmitted light (28) is reflected, and **in that** the receiver (22) comprises at least two receiving areas being separately evaluable, a polarizing analyzer (44) is arranged upstream of the receiving areas, wherein the polarization directions of the analyzers have an angular distance from one another.

2. Encoder according to one of the preceding claims, **characterized in that** in the hole of the circuit board and/or in the hole of the light receiving surface, an optical element with refracting, light-diffracting and/or light-polarizing function is provided for the transmission of light.

3. Encoder according to one of the preceding claims, **characterized in that** in the hole of the circuit board and/or in the hole of the light receiving surface, an optical filter having wavelength selection is provided.

4. Encoder according to one of the preceding claims, **characterized in that** in the hole of the electronic card and/or in the hole of the light receiving surface, an optical element having diffractive structures is provided for diffraction, deflection or dispersion of the transmitted light.

5. Encoder according to any one of the preceding claims, **characterized in that** the light transmitter is an LED, an LED chip, a laser diode or a laser chip.

6. Encoder according to any one of the preceding claims, **characterized in that** the light receiver is provided as an arrangement with a plurality of photo diodes, in particular as a receiver array in CCD or CMOS construction.

7. Encoder according to any one of the preceding claims, **characterized in that** the polarizer is formed as a disc with a normal and the normal forms with the axis of rotation an angle different from zero.

## Revendications

1. Codeur pour mesurer l'angle de rotation de deux objets relativement rotatifs avec une unité d'émission et réception (12), avec un émetteur de lumière (20), qui rayonne la lumière transmise (32) dans une direction d'émission de lumière et un récepteur de lumière (22) ayant une surface réceptrice de lumière (38), qui est agencée de telle sorte que la direction de la lumière transmise correspond à la surface normale de la surface de réception de lumière et le récepteur de lumière (22) reçoit en retour la lumière transmise réfléchie (32) en tant que lumière reçue (26), dans lequel l'émetteur de lumière (20) est disposé sur le côté du récepteur de lumière situé à l'opposé du récepteur de lumière (22) et la lumière transmise (32) passe à travers d'un trou (42) dans la surface de réception de lumière (38),
**caractérisé en ce qu'**une carte de circuit est disposée entre l'émetteur de lumière et le récepteur de lumière et l'émetteur de lumière rayonne la lumière transmise à travers d'un trou dans la carte de circuit et **en ce que** le codeur rotatif est réalisé sous forme d'un codeur de polarisation (10) comportant un polariseur (42) tournant par rapport à la source lumineuse (20) et au cours de laquelle la lumière transmise (28) est réfléchie, et **en ce que** le récepteur (22) comprend au moins deux zones de réception étant évaluable séparément, un analyseur de polarisation (44) est disposé en amont des zones de réception, dans lequel les directions de polarisation des analyseurs ont une distance angulaire les uns des autres.

2. Codeur selon l'une des revendications précédentes, **caractérisé en ce que** dans le trou de la carte de circuit et/ou dans le trou de la surface réceptrice de lumière, un élément optique avec une fonction de réfraction de lumière, diffraction de lumière et/ou polarisation de lumière est prévu pour la lumière transmise.

3. Codeur selon l'une des revendications précédentes, **caractérisé en ce que** dans le trou de la carte de circuit et/ou dans le trou de la surface réceptrice de lumière, un filtre optique avec sélection de longueur d'onde est prévu.

4. Codeur selon l'une des revendications précédentes, **caractérisé en ce que** dans le trou de la carte de circuit et/ou dans le trou de la surface réceptrice de lumière, un élément optique ayant des structures de diffraction est prévu pour la diffraction, la déviation ou la dispersion de la lumière transmise.

5. Codeur selon l'une des revendications précédentes, **caractérisé en ce que** l'émetteur de lumière est une DEL, une puce de LED, une diode laser ou une puce laser.

6. Codeur selon l'une des revendications précédentes, **caractérisé en ce que** le récepteur de lumière est fourni en arrangement d'une pluralité de photodiodes, en particulier en tant que réseau de récepteurs en méthode de construction de CCD ou CMOS.

7. Codeur selon l'une des revendications précédentes, **caractérisé en ce que** le polariseur est constitué par un disque avec une normale et que la normale forme un angle différent de zéro avec l'axe de rotation.
